Europäisches Patentamt

European Patent Office

Office européen des brevets

(11) Publication number: **0 406 977 A1**

## EUROPEAN PATENT APPLICATION

(21) Application number: 90201773.0

(22) Date of filing: 03.07.90

(51) Int. Cl.5: **C08F 4/42**

(30) Priority: **06.07.89 NL 8901728**

(43) Date of publication of application:
**09.01.91 Bulletin 91/02**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Goethals, Erik Jozef**
**Huisgaverstraat 52**
**B-9761 Ouwegem-Zingen(BE)**
Inventor: **Haucourt, Nancy Hortense Gustaaf**
**Everparkstraat 47**
**B-9050 Evergem(BE)**
Inventor: **Van Meirvenne, Drik**
**Nieuwkerkenstraat 151**
**B-2770 St. Niklaas(BE)**

(54) **Initiator and process for cationic polymerization.**

(57) The invention relates to an initiator for the cationic polymerization of electron-rich $\alpha$-olefins comprising an $\alpha$-iodo ether, according to formula (1).

$Y - O - R^1 - O - CR^2R^3 - I$    (1)

where $Y = R^4{}_3Si$

where

$R^1$ = an aliphatic residue, optionally containing an ether group

$R^2$ and $R^3$ = independent H or C1-C4 alkyl

$R^4$ = C1-C4 alkyl.

The invention also relates to a process for preparing a polymer with a polydispersity lower than 1.6 by means of the cationic polymerization of electron-rich $\alpha$-olefins by adding a monomer to an initiator described above and polymerizing it and recovering.

EP 0 406 977 A1

## INITIATOR AND PROCESS FOR CATIONIC POLYMERIZATION

The invention relates to an initiator and a process for the cationic polymerization of electron-rich α-olefins, the initiator comprising an α-iodo ether. The invention more particularly relates to the so-called 'living' polymerization of electron-rich α-olefins. The term electron-rich α-olefin is understood in this connection to mean an α-olefin whose vinyl group has an electron density higher than that of ethane. The fact is that these electron-rich α-olefins allow themselves to be conveniently polymerized via cationic polymerization. The living polymerization is characterized by few termination and chain-transfer reactions, so that polymers with a low polydispersity are obtained. The polydispersity is usually lower than 1.6, more usually lower than 1.4, particularly lower than or equal to 1.2.

It is known in the art that, preferably in an activated form, α-iodo ethers may serve as initiators for the living cationic polymerization of, for instance, vinyl ethers (Sawamoto et al.: Pol. Bul. (1988) 19, pp. 359-363). The initiator described there consists of the reaction product of hydrogen iodide or trimethyl-silyl iodide and a vinyl ether. The activator used is iodine or zinc iodide. This initiator system is not very stable. After 5 to 10 hours, significant transfer and termination reactions are found to have taken place. Moreover, the initiator system cannot very rapidly be prepared from what are indeed stable starting materials.

The object of the invention is to provide a stable initiator complex that can be obtained in a simple reaction in a short time with a very good yield (> 95%).

It is obtained, according to the invention, with an initiator according to formula 1.

$Y-O-R^1-O-CR^2R^3-I$    (1)

where

$Y = R^4{}_3Si$

$R^1$ = an aliphatic residue, optionally comprising an ether group;

$R^2$ and $R^3$ = independent H, or C1-C4 alkyl and

$R^4$ = C1-C4 alkyl.

Preferably $R^1 = -CH_2-CH_2-$, $R^2 = R^3 = H$ and $R^4 =$ methyl. The activation of the α-iodo ether preferably takes place with a so-called co-initiator. The co-initiator used may, for instance, be iodine, a metal-iodine complex (metal iodide) or a quaternary ammonium salt. Preference is given to the use of a quaternary ammonium salt such as, for instance, tetra-alkylammonium perchlorate or triflate, where the alkyl-group contains 1-8, and preferably 3-5 carbon atoms. The alkyl that is applied, is particularly n-butyl or iso-butyl.

The initiator can be prepared in a simple manner by reacting cyclic ketal with, for instance, trimethyl-silyl iodide. It is also possible first to carry out a reaction with trimethylsilyl chloride, upon which the chloride ion is exchanged with iodide. The initiator is formed in less than 2 to 3 minutes, so that it can conveniently be used for the living cationic polymerization of electron-rich α-olefins.

Examples of electron-rich α-olefins are compounds like C=C-X-, where X is an oxygen or nitrogen (ether or amine), or like C=C-R, where R is alkyl or aryl. So the α-olefins used may, for instance, be vinyl ethers, vinyl amines, 1-alkylenes and styrene-type monomers.

Examples of these are N-vinyl pyrrolidone, N-vinyl carbazole, styrene, α-methylstyrene, p-methylstyrene, chlorinated styrene and mixtures of these.

Preference is given to the use of vinyl ethers or styrene-type monomers, more particularly preference is given to vinyl ethers.

Vinyl ethers have a structure according to formula 2.

$$H_2C = \overset{\overset{\textstyle H}{|}}{C}-O-R^5 \qquad (2)$$

where $R^5$ is an organic group prefertially having 1 to 30 carbon atoms.

Further, $R^5$ may comprise blocked (that is protected from the current reaction) or non-blocked functional groups.

$R^5$ may, for instance, be methyl, ethyl, propyl, n-butyl, isobutyl or tertiary butyl, but may also be derived from decanol or from an ester of a polyol and fatty acids with 14 to 24 carbon atoms. Depending on the side chain, a more polar or less polar polymer can thus be obtained. Side chains with (blocked) functional groups that can be applied are described in, for instance, Sawamoto et al. Makromol. Chem., Macromol. Symp. 1988, 13/14, pp 513-526. Among these are saturated esters, unsaturated esters, poly-(oxyethylenes) or polyethers, imides and trialkylsilyloxyl groups. The general formula of the side-chains in this paper is -O-CH$_2$CH$_2$-X, whereby X a.o. can be C(COOEt)$_3$, CH(COOEt)$_2$, CH$_2$COOH, OH, NH$_2$, OSiR$_3$, (OCH$_2$CH$_2$-)$_n$-OEt, etc.

Owing to the living nature of the initiator, and by carrying out different reactions one after another by successively adding different monomers to the reaction mixture it is possible to make well-defined block copolymers.

The reaction can be terminated by treating the α-iodo group with a compound terminating the reaction. Examples of this compound are Lewis basis and anions, such as amino- and hydroxy-compounds, e.g. methanol. Under terminating the reaction is understood the inactivation of the living polymerisation.

It is possible to make terminally functional (telechelic) polymers by splitting off, dependently or independently of each other, the silyl group and the α-iodo ether. In a manner analogous to the processes described in the above-mentioned Makromel. Chem. article, functional groups can be made. In this article the following functional groups are described: carboxylic acid, ester, amine, alcohol and polymerizable groups. Examples are COOEt, COOH, NH$_2$, OH, OOCC(CH$_3$) = CH$_2$, OCH = CH$_2$, epoxide etc.

The advantage of the initiator according to the invention is that the simple de-blocking of the silyl group yields a terminal hydroxy group. The silylgroup is de-blocked by treating the product obtained after polymerization with a compound with a hydrogen atom active in respect of the Si-O-C band, so that the Si-O-C band is broken. An example of such a compound is H$_2$O. Using the terminally functional groups, it is easy to carry out further reactions.

The (co)polymers obtained are characterized by a low polydispersity and mostly have a molecular weight of between 500 and 10$^5$ dalton, preferably between 10$^3$ and 10$^4$ dalton.

Particularly block copolymers with the blocks having different polarities can very well be used as compatibilizers or emulsifiers.

The invention will be further elucidated by means of the following non-restrictive examples.

Examples

Example I

In a two-neck flask 8.55 ml CH$_2$Cl$_2$ and 196 mg TBAT (tetra-butylammoniumtriphlate, nBu$_4$N + CF$_3$SO$_3$) were combined in a dry argon atmosphere. The mixture was cooled to about -40°C. Successively, 35 μl DXL (1,3-dioxolane) and 71 μl TMSI (trimethylsilyl iodide) were added. After reacting for 5 minutes, 1.34 ml nBVE (n-butyl-vinyl ether) was added to this initiator - co-initiator system. After 50 minutes the polymerization was terminated using 40 μl (2 eq.) MeOH and lutidine. After addition of 30 ml CH$_2$Cl$_2$ to the reaction mixture, an extraction treatment took place using 50 ml of a 10% Na$_2$S$_2$O$_3$ solution in water. After washing with water CH$_2$Cl$_2$ was drained off. The polymer mixture was re-dissolved in diethyl ether. After addition of Na$_2$SO$_4$, the ether solution was filtered off and the filtrate was evaporated and dried under vacuum.

Examples II and III

Analogous to example I, two polymers were made, the monomer/initiator ratio being respectively 1:0.025 and 1:0.017.

Of the polymers obtained the polydispersity ($M_w/M_n$) was determined by means of gelpermeation chromatography (GPC) with polystyrene standard as calibration, the molecular weight by means of vapour-pressure osmometry (VPOM). The results are shown in table 1.

| Exp. | $M_o$ | $I_o$ | $M_w/M_n$ | $M_n$ |
|------|-------|-------|-----------|-------|
|      | (mol/l) | (mol/l) | (GPC) | (VPOM) |
| I    | 1 | 0.05 | 1.3 | 1216 |
| II   | 1 | 0.025 | 1.2 | 1970 |
| III  | 1 | 0.017 | 1.2 | 3925 |

$M_o$: concentration of n-butylvinyl ether

$I_o$: initiator concentration

These results show that with this initiator polymers can be obtained having a narrow molecular weight distribution (low polydispersity).

## Claims

1. Initiator for the cationic polymerization of electron-richefins comprising an $\alpha$-iodo ether, according to formula (1).

$$Y - O - R^1 - O - CR^2R^3 - I \qquad (1)$$

where $Y = R^4{}_3Si$

where

$R^1$ = an aliphatic residue, optionally containing an ether group

$R^2$ and $R^3$ = independent H or C1-C4 alkyl

$R^4$ = C1-C4 alkyl.

2. Initiator according to claim 1, where R1 is $-CH_2CH_2-$.

3. Initiator according to any one of claims 1-2, where $R^2$ and $R^3$ are both H.

4. Initiator according to any one of claims 1-3, where $R^4$ is methyl.

5. Initiator according to any one of claims 1-4, characterized in that the $\alpha$-iodo ether is stabilized with a co-initiator.

6. Initiator according to claim 5, characterized in that the co- initiator is a metal iodide or a quaternary ammonium salt.

7. Initiator according to claim 6, characterized in that the co- initiator is a quaternary ammonium salt.

8. Application of an initiator according to any one of claims 1-7 for the cationic polymerization of electron-richefinic compounds.

9. Process for preparing a polymer with a polydispersity lower than 1.4 by means of the cationic polymerization of electron rich $\alpha$-olefins by adding a monomer to an initiator according to any one of claims 1-7, polymerizing it and recovering the polymer.

10. Process according to claim 9, characterized in that the $\alpha$-olefin used is a styrene-type monomer or a vinyl ether.

11. Process for preparing block copolymers by means of a cationic polymerization of election rich $\alpha$-olefins by adding different electron-rich $\alpha$-olefins in a desired succession to the initiator according to any one of claims 1-7, successively polymerizing them and recovering the block copolymer.

12. Process according to any one of claims 9-11, characterized in that the product obtained after polymerization is treated with a compound with a hydrogen atom active in respect of the Si-O-C band, so that the Si-O-C band is broken.

13. Process according to any one of claims 9-12, characterized in that at the end of the polymerisation reaction the $\alpha$-iodo-ether group is treated with a compound terminating the reaction.

14. Polymer obtained by applying a process according to any one of claims 9-12.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 372 189 (BAYER)<br>* Claims 1,2 *<br>--- | 1 | C 08 F 4/42 |
| A | FR-A-2 347 376 (BAYER)<br>* Claims 1,2 *<br>--- | 1 | |
| A | FR-A-2 094 611 (SOC. NAT. DES PETROLES D'AQUITAINE)<br>* Claims 1-15 *<br>--- | 1 | |
| D,A | POLYMER BULLETIN, vol. 19, 1988, pages 359-363, Springer-Verlag; M. SAWAMOTO et al.: "Living cationic polymerization of isobutyl vinyl ether initiated by the trimethylsilyl iodide/zinc iodide system"<br>* Pages 359-363 *<br>--- | 1 | |
| D,A | MAKROMOL. CHEM., MACROMOL. SYMP. 13/14, 1988, pages 513-526; M. SAWAMOTO et al.: "Synthesis of new functional polymers by living cationic polymerization"<br>* pages 513-526 *<br>----- | 1 | TECHNICAL FIELDS SEARCHED (Int. Cl.5)<br><br>C 08 F |

The present search report has been drawn up for all claims

| Place of search | Date of completion of the search | Examiner |
|---|---|---|
| THE HAGUE | 17-08-1990 | PERMENTIER W.A. |

EPO FORM 1503 03.82 (P0401)